# EUROPÄISCHE PATENTANMELDUNG

(11) **EP 0 830 814 A2**
(43) Veröffentlichungstag der Anmeldung: **25.03.1998**
(21) Anmeldenummer: 97116158.3
(22) Anmeldetag: 17.09.1997
(51) Int. Cl.: A21B 1/40, A21B 1/10, A21B 1/48

(54) **Durchlaufbackofen**

(30) Priorität: 18.09.1996 DE 19638073
(71) Anmelder: MIWE Michael Wenz GmbH, 97450 Arnstein (DE)
(72) Erfinder: Bremer, Adam, 97450 Arnstein (DE); Kömm, Ludwig, 97072 Würzburg (DE)
(74) Vertreter: Böck, Bernhard, Dipl.-Ing.

(57) **Zusammenfassung**

Die Erfindung betrifft einen Durchlaufbackofen mit einem Backraum, einer zumindest im wesentlichen die gesamte Länge des Backraums durchlaufenden Transportvorrichtung für das Backgut und einer Heizvorrichtung zur Erwärmung des Backraums, wobei mindestens zwei auf verschiedenen Seiten des Backgutes angeordnete Heizkänäle oder Heizkanalsysteme so mit in der Heizvorrichtung erwärmter Heißluft beaufschlagbar sind, daß die der Heißluft innewohnende Wärme zumindest über die zum Backgut wiesende Wand der Heizkanäle an den Backraum übertragbar ist. Die Erfindung ist dadurch gekennzeichnet, daß jedem der Heizkanäle oder jedem Heizkanalsystem jeweils eine getrennte Heizvorrichtung zugeordnet ist, wobei jede Heizvorrichtung eine Regeleinrichtung zur Regelung und/oder Steuerung der Temperatur der Heißluft aufweist. Dadurch lassen sich bei einfachem konstruktivem Aufbau gleichmäßigere Backergebnisse erzielen.

## Beschreibung

Die Erfindung betrifft einen Durchlaufbackofen nach dem Oberbegriff des Patentanspruchs 1 und ein Verfahren zum Betrieb eines Durchlaufbackofens nach dem Patentanspruch 10.

Durchlaufbacköfen der in Rede stehenden Art finden beispielsweise als sogenannte Hochtemperatur-Backöfen mit einer Backtemperatur von bis zu 500 °C im Bäckereibereich Verwendung, insbesondere, jedoch keineswegs ausschließlich, als Anbacköfen, Vorbacköfen und/oder Fladenbrotbacköfen.

Es sind Durchlaufbacköfen bekannt, die einen Bandförderer zum Transport des Backgutes aufweisen, der den Backraum in seiner gesamten Länge durchgreift. Ober- und unterhalb des Bandförderers und damit ober- und unterhalb des Backgutes ist jeweils ein Heizkanal vorgesehen, der mit in einer Heizvorrichtung erwärmten Heißluft beaufschlagbar ist. Beim Durchströmen der Heizkanäle gibt die Heißluft einen wesentlichen Teil der ihr innewohnenden Wärme über die jeweils zum Backraum weisende Wand des Heizkanals als Ober- bzw. Unterhitze an den Backraum und damit an das Heizgut ab Als Heißluft finden die Rauchgase eines Öl- oder Gasbrenners Verwendung, die über ein Rauchgasumwälzgebläse mit relativ hoher Strömungsgeschwindigkeit durch die Heizkanäle gefördert werden.

In Abhängigkeit von beispielsweise der Backwarenart, der Backgutgröße, Vortemperatur des Backgutes usw. erfolgt zum einen eine thermostatische Regelung des Brenners und damit eine Einstellung der Vorlauftemperatur der Rauchgase, die für beide Heizkanäle gleich ist, und zum anderen, falls, wie dies regelmäßig der Fall ist, der Temperaturbedarf bei Ober- und Unterhitze unterschiedlich ist, eine Drosselung des Rauchgasstroms im Heizkanal mit dem geringerem Wärmebedarf. Die dabei notwendigen Drosselorgane wie Schieber, Klappen etc sind konstrukiv aufwendig und störungsanfällig. Der wesentliche Nachteil dieser bekannten Durchlauföfen liegt jedoch darin, daß aufgrund der gedrosselten d.h. verringerten Strömungsmenge der Rauchgase im Heizkanal mit dem geringerem Wärmebedarf eine ungleichmäßige Wärmeabgabe über die gesamte Heizkanallänge, verglichen mit dem ungedrosselten Heizkanal, erfolgt, so daß in unerwünschter Weise mit zunehmender Drosselung die Heiz- bzw Backleistung mehr und mehr auf den Anfang der Backraumlänge und damit der Backzeit verschoben wird Dies führt zu ungleichmäßigen Backergebnissen. Ein weiterer Nachteil dieser bekannten Durchlaufbacköfen ist, daß sich bei unterschiedlichen Drosselstellungen die Druckverhältnisse im Brennraum ändern, wodurch die Verbrennung negativ beeinflußt und der Brennerwirkungsgrad verschlechtert wird.

Ausgehend von diesem Stand der Technik ist es die Aufgabe der vorliegenden Erfindung, einen Durchlaufbackofen und ein Verfahren zum Betrieb eines Durchlaufbackofens zu schaffen, mit dem bei einfachem Aufbau des Durchlaufbackofens bessere Backergebnisse, insbesondere bei unterschiedlichem Wärmebedarf auf unterschiedlichen Seiten des Backgutes, zu erzielen sind.

Diese Aufgabe wird durch einen Durchlaufbackofen nach der Lehre des Patentanspruchs 1 und ein Verfahren nach der Lehre des Patentanspruchs 10 gelöst.

Vorteilhafte Ausgestaltungen der Erfindung sind Gegenstand der Unteransprüche.

Der Durchlaufbackofen der Erfindung weist zunächst einmal einen Backraum und eine zumindest im wesentlichen die gesamte Länge des Backraums durchlaufende Transportvorrichtung für das Backgut auf. Weiter findet erfindungsgemäß eine Heizvorrichtung zur Erwärmung des Backraums Verwendung, wobei mindestens zwei auf verschiedenen Seiten des Backgutes angeordnete Heizkänäle oder Heizkanalsysteme angeordnet und so mit in der Heizvorrichtung erwärmter Heißluft beaufschlagbar sind, daß die der Heißluft innewohnende Wärme zumindest über die zum Backgut weisende Wand der Heizkanäle an den Backraum übertragbar ist. Mit anderen Worten, die in den Heizkanälen geführte Heißluft erhitzt zunächst einmal die Wände der Heizkanäle, worauf dann die Abgabe der Wärme an den Backraum und das Backgut durch Konvektion und Strahlung erfolgt. Die Heizkanäle können dabei als Einzelkanäle ausgeführt oder zu Heizkanalsystemen mit einer Vielzahl von Einzelkanälen zusammengefaßt sein.

Im Gegensatz zum Stand der Technik, bei dem nur eine einzige Heizvorrichtung für sämtliche Heizkanäle vorgesehen ist, ist es ein wesentliches Merkmal der Erfindung, daß jedem der Heizkanäle oder jedem Heizkanalsystem jeweils eine getrennte Heizvorrichtung zugeordnet ist, wobei jede Heizvorrichtung eine Regeleinrichtung zur Regelung und/oder Steuerung der Temperatur der Heißluft aufweist. Mit anderen Worten, jedes System bestehend aus Heizvorrichtung und Heizkanal oder Heizkanalsystem ist unabhängig und thermisch, insbesondere thermostatisch, steuerbar Dadurch kann in einfacher Weise für jede Seite des Backgutes die Wärmeleistung und damit die Backleistung unabhängig von der Durchströmung der Heißluft durch die Heizkanäle eingestellt werden, wodurch sich eine im Vergleich zum Stand der Technik über die Länge der Heizkanäle bzw des Backraums erheblich konstantere Wärmeübertragung an den Backraum durch volle Ausnutzung der Heizflächen realisieren läßt Durch die volle Ausnutzung der Heizfläche und damit der Wärmeübertragung an das Backgut im wesentlichen über die gesamt Backzeit kann zudem mit geringeren Heißlufttemperaturen gearbeitet werden, so daß die Wirtschaftlichkeit insbesondere im Hinblick auf den Brennstoffverbrauch ebenfalls erheblich verbessert wird.

Ein weiterer Vorteil des erfindungsgemäßen Durchlaufbackofens besteht darin, daß durch den möglichen Wegfall sämtlicher Drosselorgane wie Schieber, Klappen etc. sich der konstruktive Aufwand wesentlich verringert Dies führt im Ergebnis bei verbesserter Backleistung zu einem kostengünstigeren Ofen.

Die Heizvorrichtung kann beliebiger Art sein, beispielsweise in Form eines elektrischen Heizelementes, solange die Möglichkeit einer zuverlässigen thermischen Regelung gewährleistet ist. Ebenso kann die Übertragung der in der Heizvorrichtung erzeugten Wärme indirekt über Wärmetauscher auf die Heißluft erfolgen. Gemäß einem Ausführungsbeispiel weist jedoch jede Heizvorrichtung mindestens einen insbesondere gas- oder ölbetriebenen Brenner auf, wobei die Rauchgase des Brenners als Heißluft Verwendung finden. Derartige Brenner, insbesondere Gasbrenner, ermöglichen bei relativ geringem Brennstoffbedarf eine einfache, zuverlässige, schnell reagierende und leicht reproduzierende Einstellung der Temperatur der Heißluft bzw. der Rauchgase.

In grundsätzlich beliebiger Weise kann der Transport der Heißluft bzw. der Rauchgase durch die Heizkanäle oder die Heizkanalsysteme beispielsweise konvektiv oder aufgrund des Strömungsimpulspegels der den Brenner verlassenden Rauchgase erfolgen. Gemäß einem bevorzugten Ausführungsbeispiel der Erfindung jedoch ist zur Erzielung und Aufrechterhaltung einer optimalen Strömungsgeschwindigkeit der Heißluft bzw der Rauchgase jeweils mindestens ein jeder Heizvorrichtung und/oder jedem Heizkanal oder Heizkanalsystem zugeordnetes Umwälzgebläse zur Umwälzung der Rauchgase durch den Heizkanal oder das Heizkanalsystem vorgesehen. Vorzugsweise weist dabei jedes Umwälzgebläse eine Regeleinrichtung zur Regelung und/oder Steuerung der Menge der umgewälzten Heißluft auf.

Erfindungsgemäß sind die Heizkanäle oder Heizkanalsysteme auf den Seiten des Backraums bzw. des Backgutes angeordnet, die mit der Heizleistung beaufschlagt werden sollen. So können beispielsweise entsprechende Heizkanäle an vier Seiten des Backraums angeordnet sein, wobei jeweils zwei Heizkanäle oder Heizkanalsysteme einander gegenüberliegen. Vorzugsweise jedoch sind jeweils Heizkanäle oder Heizkanalsysteme oberhalb und unterhalb des Backgutes zur Erzeugung von Ober- und Unterhitze angeordnet. Diese Anordnung ist für die meisten Back- und Backgutarten vorteilhaft und ausreichend.

Der Verlauf der Heizkanäle bezüglich des Backraumes hängt zunächst einmal von der gewünschten Wärmeübertragungscharakteristik ab. So können beispielsweise die Heizkanäle mäanderartig entlang der jeweiligen Wand des Backraums verlaufen. Vorzugsweise jedoch verlaufen die Heizkanäle oder Heizkanalsysteme im wesentlichen über die gesamte Länge des Backraums und weisen mindestens einen Einlaß für die Heißluft bzw. die Rauchgase an einem axialen Ende des Backraums und mindestens einen Auslaß am gegenüberliegenden axialen Ende des Backraums auf. Dabei können die Heizkanäle an einer Wand des Backraums angeordnet sein oder aber diese Wand bilden. Bei dieser Gestaltung ergibt sich eine gleichmäßige Durchströmung der Heizkanäle bei einfachem konstruktivem Aufbau.

In Abhängigkeit von der gewünschten Backart kann die Heißluft in den Heizkanälen oder Heizkanalsystemen im wesentlichen im Gleichstrom zur Transportrichtung des Backgutes geführt sein Alternativ dazu kann die Heißluft in den Heizkanälen oder Heizkanalsystemen im wesentlichen im Gegenstrom zur Transportrichtung des Backgutes geführt werden.

Die Heißluft bzw. die Rauchgase können, nachdem sie unter Abkühlung die Heizkanäle durchströmt und diese dann verlassen haben, beispielsweise im Kreislauf zur Heizvorrichtung rückgeführt und dort mit frischer Heißluft zur genauen Temperatureinstellung zur Wiederverwendung im Kreislauf vermischt werden Ebenso können die abgekühlten Rauchgase unter Abgabe eines Teils ihrer Restwärme bis hin zur Kondensation in einem Wärmetauscher zum Vorwärmen der zur Verbrennung notwendigen Frischluft Verwendung finden Falls dies nicht notwendig oder gewünscht ist, können die Rauchgase über einen Abzug zur Abführung der abgekühlten Heißluft nach dem Verlassen der Heizkanäle oder der Heizkanalsysteme beispielsweise in die Umgebungsatmosphäre abgeleitet werden.

Um einen hohen thermischen Wirkungsgrad zu gewährleisten und die Wärmeverluste gering zu halten, sind nach einem bevorzugten Ausführungsbeispiel der Erfindung die vom Backraum wegweisenden Wandbereiche der Heizkanäle oder Heizkanalsysteme mit einer thermischen Isolierung versehen.

Die Transportvorrichtung für das Backgut durch den Durchlaufbackofen kann beispeilsweise als Band- oder Kettenförderer ausgebildet sein.

Die Erfindung wird im folgenden anhand lediglich ein Ausführungsbeispiel darstellender Zeichnungen näher erläutert. Es zeigt
- **Fig. 1**: in schematischer Darstellung einen Längsschnitt durch ein Ausführungsbeispiel eines erfindungsgemäßen Durchlaufbackofens mit Ober- und Unterhitze, und
- **Fig. 2**: ebenfalls in schematischer Darstellung die Temperaturverläufe in den Heizkanälen des Ausführungsbeispiels nach **Fig. 1**.

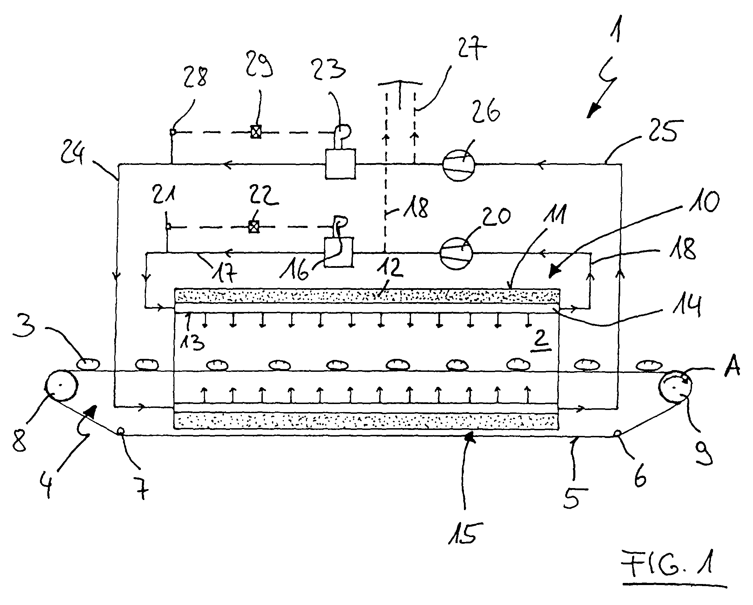

Der in Fig. 1 dargestellte Durchlaufbackofen 1 weist einen Backraum 2 auf, der eine im wesentlichen rohrförmige Gestalt mit im wesentlichen viereckigem Querschnitt besitzt Der Backraum 2 ist an seinen beiden axialen Enden im wesentlichen offen; das Gehäuse des Durchlaufbackofens 1, das öffenbare Verschlußmittel für die axial offenen Enden des Backraums 2 aufweisen kann, ist aus Gründen einer klareren Darstellung nicht gezeigt.

Zum Transport des Backgutes 3 in Form von z.B. Teigrohlingen ist eine Transportvorrichtung in Form eines Bandförderers 4 vorgesehen. Der Bandförderer 4 weist ein endloses Transportband 5 auf, das über Umlenkrollen 6, 7, 8 und 9 geführt und im Bereich der Umlenkrolle 9 durch einen durch den Pfeil A schematisch angedeuteten Antrieb angetrieben wird Der Antrieb erfolgt in Pfeilrichtung A, so daß das Backgut 3 in der Darstellung nach Fig. 1 von links nach rechts durch den Backraum 2 transportiert wird.

Die obere Wand des Backraums 2 wird durch einen Heizkanal 10 gebildet, der den Backraum 2 nach oben im wesentlichen luftdicht abschließt Der Heizkanal 10 weist einen ersten nach außen (in der Fig. 1 nach oben) zeigenden Wandbereich 11 auf, der mit einem thermischen Isoliermaterial 12 zur Verringerung der Wärmeabstrahlung in diesem Bereich versehen ist. Der zum Innenraum des Backraum 2 weisende Wandbereich 13 des Heizkanals 10 ist nicht mit Isoliermaterial versehen, um einen möglichst ungehinderten Wärmeübergang vom Heizkanal 10 zum Backraum 2 zu gewährleisten Zwischen dem isolierenden Bereich und dem Wandbereich 13 ist ein sich im wesentlichen über die gesamte Länge des Backraums 2 geradlinig erstreckender Hohlraum 14 vorgesehen.

Die untere Wand des Backraums 2 wird in analoger Weise durch einen Heizkanal 15 gebildet, der spiegelsymmetrisch zur Mittelebene des Backraums 2 den gleichen Aufbau wie der Heizkanal 10 aufweist.

Wie weiter Fig 1 zu entnehmen ist, ist beim Durchlaufbackofen 1 der Erfindung ein erster Gasbrenner 16 vorgesehen, der heiße Rauchgase erzeugt, die über eine lediglich schematisch dargestellte Vorlaufleitung 17 dem Hohlraum 14 des oberen Heizkanals 10 zugeführt und durch diesen hindurchgeleitet werden. Am axial gegenüberliegenden Ende des Heizkanals 10 verlassen die abgekühlten Rauchgase den Hohlraum 14 und werden uber eine Rücklaufleitung 18 entweder zum Brenner 16 zurückgeführt und/oder über einen Abgaskamin 19 abgeführt Zur Erzielung und Aufrechterhaltung einer optimalen Durchströmung des Heizkanals 10 durch die Rauchgase ist ein Umwälzgebläse 20 vorgesehen.

Um die Zufuhr von Rauchgasen einer genau bestimmten Vorlauftemperatur durch die Vorlaufleitung 17 in den Heizkanal 10 zu gewährleisten, ist in der Vorlaufleitung 17 ein Temperaturfühler 21 angeordnet, der mit einem thermostatischen Regler 22 zusammenwirkt. Bei zu geringer Vorlauftemperatur erfolgt ein Anschalten oder Hochfahren des Brenners 16; bei zu hoher Vorlauftemperatur ein Abschalten oder Herunterfahren des Brenners 16 und/oder gegebenenfalls eine Zumischung relativ kalter Rauchgase aus der Rücklaufleitung 18. Mit dieser Anordnung läßt sich in einfacher Weise durch entsprechende Einstellung des thermostatischen Reglers 22 die gewünschte Wärmeleistung im Heizkanal 10 und damit die gewünschte Oberhitze ohne Strömungsschwankungen einstellen.

In prinzipiell gleicher Weise sind für den unteren Heizkanal 15 ein Gasbrenner 23, eine Vorlaufleitung 24, eine Rücklaufleitung 25, ein Umwälzgebläse 26 und ein Abgaskamin 27 vorgesehen. Die Regelung der Wärmeleistung im unteren Heizkanal 15 und damit die Einstellung der gewünschten Unterhitze erfolgt völlig unabhängig vom oberen Heizkanal 10 über den Temperaturfühler 28 und den thermostatischen Regler 29 in der vorbeschriebenen Weise.

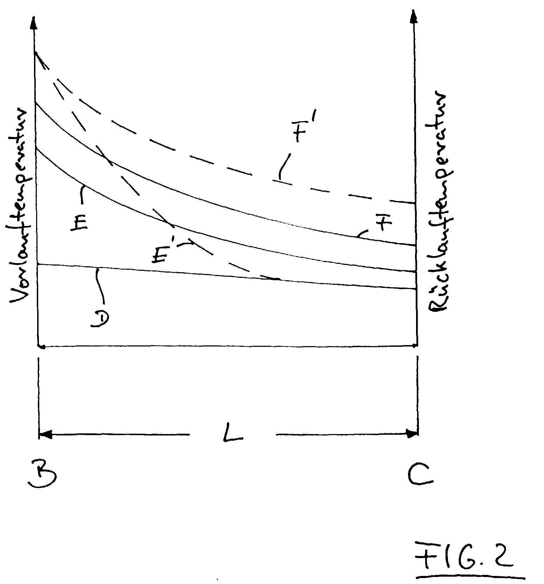

In Fig. 2 sind die Temperaturverläufe in den Heizkanälen 10 und 15 nach Fig. 1 dargestellt. Die Abszisse entspricht der Länge L des Backraums 2, wobei der Punkt B den Einlauf der Rauchgase und damit den Anfang des Backraums 2 und Punkt C den Auslauf der Rauchgase und damit das Ende des Backraums 2, bezogen auf die Transportrichtung des Backgutes 3 durch den Backraum 2, bezeichnet. Die Temperatur bei B entspricht somit der Vorlauftemperatur, die Temperatur bei C der Rücklauftemperatur der Rauchgase.

Die Gerade D im Diagramm nach Fig 2 entspricht näherungsweise dem Temperaturverlauf im Backraum 2. Durch Temperaturausgleich im stationären Betrieb, d h nach dem Hochfahren des Durchlaufbackofens herrscht im Backraum 2 eine nahezu konstante Innentemperatur. Lediglich ein geringer Temperaturabfall in Transportrichtung des Backgutes ist zu vermerken.

Die Kurve E entspricht der Rauchgastemperatur im Innenraum des unteren Heizkanals 15, die letztendlich ein Maß für die Unterhitze ist. Wie Fig. 2 zu entnehmen ist, erfolgt beim Durchströmen des Heizkanals 15 eine gleichmäßige Abkühlung der Rauchgase über die gesamte Länge L des Backraums 2, wobei aufgrund der über die gesamte Länge L wirksamen Temperaturdifferenz zwischen dem Backraum 2 (Gerade D) und dem Heizkanal 15 (Kurve E) eine volle Ausnutzung der möglichen Heizfläche und damit der Backzeit stattfindet.

Die Kurve F entspricht der Rauchgastemperatur im Innenraum des oberen Heizkanals 10, die ein Maß für die Oberhitze ist. Auch hier erfolgt analog zum vorbeschriebenen Temperaturverlauf eine volle Ausnutzung der möglichen Heizfläche.

Wie weiter der Fig. 2 zu entnehmen ist, können beim erfindungsgemäßen Durchlaufbackofen 1 die Vorlauftemperaturen von Ober- und Unterhitze unabhängig voneinander eingestellt werden, wodurch ohne Beeinflussung der Durchströmung der Heizkanäle und damit der gleichmäßigen Wärmeabgabe beispielsweise eine höhere Oberhitze eingestellt werden kann oder umgekehrt.

Zum Vergleich ist in der Fig. 2 der Temperaturverlauf der Rauchgase eines Durchlaufbackofens nach den Stand der Technik strichliert dargestellt Dabei entspricht E' der Unterhitze und F' der Oberhitze. Da nach dem Stand der Technik nur ein Brenner vorgesehen ist, ist die Vorlauftemperatur für Ober- und Unterhitze gleich. Die unterschiedlichen Temperaturverläufe für Ober- und Unterhitze werden lediglich durch Drosselung der Strömungsmenge erreicht. So entspricht der Temperaturverlauf der Oberhitze F' einer ungedrosselten Strömung, während zur Erzielung einer geringeren Unterhitze die Strömung in den unteren Heizkanal (E') gedrosselt ist Aufgrund der dadurch geringeren in den unteren Heizkanal gelangenden Menge an Heißluft erfolgt eine wesentliche schnellere Abkühlung der heißen Rauchgase bis auf eine Temperatur, die der Backofeninnentemperatur entspricht. Ab diesem Punkt erfolgt keine Wärmeabgabe an den Backraum mehr, so daß lediglich ein Teil der möglichen Heizfläche und damit ein Teil der Backzeit ausgenutzt wird.

Da die Flächen unter den Temperaturverläufen ein Maß für die auf das Backgut übertragene Wärmemengen sind, ist leicht zu ersehen, daß bei dem erfindungsgemäß zu erzielenden Temperaturverlauf mit niedrigeren Vorlauftemperaturen gearbeitet werden kann, wodurch sich ein wirtschaftlicherer Brennerbetrieb ergibt. Weiter werden Temperaturspitzen am Beginn des Backvorgangs vermieden und gleichmäßigere Backvorgänge ermöglicht.

Die Backzeit beträgt in Abhängigkeit vom Backgut typischerweise ca. 0,5 bis 5 min.

## Patentansprüche

1. Durchlaufbackofen mit einem Backraum, einer zumindest im wesentlichen die gesamte Länge des Backraums durchlaufenden Transportvorrichtung für das Backgut und einer Heizvorrichtung zur Erwärmung des Backraums, wobei mindestens zwei auf verschiedenen Seiten des Backgutes angeordnete Heizkänäle oder Heizkanalsysteme so mit in der Heizvorrichtung erwärmter Heißluft beaufschlagbar sind, daß die der Heißluft innewohnende Wärme zumindest über die zum Backgut weisende Wand der Heizkanäle an den Backraum übertragbar ist,
dadurch **gekennzeichnet**,
daß jedem der Heizkanäle (10,15) oder jedem Heizkanalsystem jeweils eine getrennte Heizvorrichtung (16,23) zugeordnet ist,
wobei jede Heizvorrichtung (16,23) eine Regeleinrichtung (21,22; 28,29) zur Regelung und/oder Steuerung der Temperatur der Heißluft aufweist

2. Durchlaufbackofen nach Anspruch 1,
dadurch **gekennzeichnet**,
daß jede Heizvorrichtung (16,23) mindestens einen insbesondere gas- oder ölbetriebenen Brenner (16,23) aufweist, wobei die Rauchgase des Brenners (16,23) als Heißluft Verwendung finden.

3. Durchlaufbackofen nach Anspruch 1 oder 2,
**gekennzeichnet** durch
jeweils mindestens ein jeder Heizvorrichtung (16,23) und/oder jedem Heizkanal (10,15) oder Heizkanalsystem zugeordnetes Umwälzgebläse (20,26) zur Umwälzung der Rauchgase durch den Heizkanal (10,15) oder das Heizkanalsystem.

4. Durchlaufbackofen nach Anspruch 3,
dadurch **gekennzeichnet**,
daß jedes Umwälzgebläse (20,26) eine Regeleinrichtung zur Regelung und/oder Steuerung der Menge der umgewälzten Heißluft aufweist.

5. Durchlaufbackofen nach einem der Ansprüch 1 bis 4,
dadurch **gekennzeichnet**,
daß jeweils die Heizkanäle (10,15) oder Heizkanalsysteme oberhalb und unterhalb des Backgutes (3) zur Erzeugung von Ober- und Unterhitze angeordnet sind.

6. Durchlaufbackofen nach einem der Ansprüche 1 bis 5,
dadurch **gekennzeichnet**,
daß die Heizkanäle (10,15) oder Heizkanalsysteme im wesentlichen über die gesamte Länge des Backraums (2) verlaufen und mindestens einen Einlaß für die Heißgase an einem axialen Ende des Backraums (2) und mindestens einen Auslaß am gegenüberliegenden axialen Ende des Backraums (2) aufweisen.

7. Durchlaufbackofen nach einem der Ansprüche 1 bis 6,
**gekennzeichet** durch
mindestens einen Abzug (19,27) zur Abführung der abgekühlten Heißluft nach dem Verlassen der Heizkanäle (10,15) oder der Heizkanalsysteme.

8. Durchlaufbackofen nach einem der Ansprüche 1 bis 7,
dadurch **gekennzeichnet**,
daß die vom Backraum (2) wegweisenden Wandbereiche (11) der Heizkanale (10,15) oder Heizkanalsysteme mit einer thermischen Isolierung (12) versehen sind.

9. Durchlaufbackofen nach einem der Ansprüche 1 bis 8,
dadurch **gekennzeichnet**,
daß die Transportvorrichtung (4) als Band- oder Kettenförderer ausgebildet ist.

10. Verfahren zum Betrieb eines Durchlaufbackofens (1) mit einem Backraum (2), einer zumindest im wesentlichen die gesamte Länge (L) des Backraums (2) durchlaufenden Transportvorrichtung (4) für das Backgut (3) und einer Heizvorrichtung (16,23) zur Erwärmung des Backraums (2), wobei mindestens zwei auf verschiedenen Seiten des Backgutes (3) angeordnete Heizkänäle (10,15) oder Heizkanalsysteme so mit in der Heizvorrichtung (10,15) erwärmter Heißluft beaufschlagbar sind, daß die der Heißluft innewohnende Wärme zumindest über die zum Backgut (3) weisende Wand (13) der Heizkanäle (10,15) an den Backraum (2) übertragbar ist, wobei jedem der Heizkanäle (10,15) oder jedem Heizkanalsystem Heißluft über jeweils eine getrennte thermisch regelbare Heizvorrichtung (16,21,22;23,28,29) zugeführt wird.

11. Verfahren nach Anspruch 10,
dadurch **gekennzeichnet**,
daß die Führung der Heißluft zu und durch die Heizkanäle (10,15) oder Heizkanalsysteme konvektiv oder gebläsebeaufschlagt erfolgt.

12. Verfahren nach Anspruch 10 oder 11,
dadurch **gekennzeichnet**,
daß die Heißluft in den Heizkanälen (10,15) oder Heizkanalsystemen im wesentlichen im Gleichstrom zur Transportrichtung des Backgutes (3) geführt wird.

13. Verfahren nach Anspruch 10 oder 11,
dadurch **gekennzeichnet**,
daß die Heißluft in den Heizkanälen (10,15) oder Heizkanalsystemen im wesentlichen im Gegenstrom zur Transportrichtung des Backgutes (3) geführt wird.

14. Verfahren nach einem der Ansprüche 10 bis 13,
dadurch **gekennzeichnet**,
daß die abgekühlte Heißluft nach dem Verlassen der Heizkanäle (10,15) oder Heizkanalsysteme zur Vorwärmung der Verbrennungsluft der Heizvorrichtung (16,23) verwendet wird.
